# EUROPEAN PATENT APPLICATION

(11) **EP 4 095 361 A1**
(43) Date of publication of application: **30.11.2022**
(21) Application number: 21175839.6
(22) Date of filing: 26.05.2021
(51) Int. Cl.: F01N 3/20, F01N 3/023, F01N 11/00, F01N 9/00, F02D 41/02, F02D 41/26, B60W 50/00, B60W 50/035, B60W 50/02

(54) **ADJUST CONTROL STRATEGY BASED ON FAULT EVENTS COMBINED WITH PREDICTIVE DATA**

(71) Applicant: VOLVO TRUCK CORPORATION, 405 08 Göteborg (SE)
(72) Inventor: ELEBRING, David, 448 37 Floda (SE); KORSGREN, John, 425 35 Hisings Kärra (SE); PETERSSON, Martin, 425 43 Hisings Kärra (SE); STJERNBERG, Oscar, 411 35 Göteborg (SE); KAFVELSTRÖM, Maria, 423 53 Göteborg (SE); WILHELMSSON, Martin, 417 53 Göteborg (SE)
(74) Representative: Kransell & Wennborg KB

(57) **Abstract**

The invention relates to a method for prevention of fault events on vehicles comprising: acquiring (S102) predictive data related to predictive events (x1-x7) for a vehicle (1); processing (S104) the predictive data (x1-x7) with a vehicle performance model (10) adapted to relate specific predictive events to specific vehicle performance events; and adjusting (S106) a control strategy for the vehicle based on an outcome of the processing to at least reduce the risk that a specific vehicle performance event (y6) occurs when the vehicle reaches a corresponding specific predictive event (x6).

The invention also relates to a system for prevention of fault events, a vehicle comprising such a system, a computer program, a computer readable medium and a control unit for performing the method.

## Description

### TECHNICAL FIELD

The present disclosure relates to a method for prevention of fault events on vehicles. The present disclosure also relates to a corresponding system. Although the method and system will be described in relation to a vehicle in the form of a truck, the method and system can also be efficiently incorporated in other vehicles types such as busses.

### BACKGROUND

Vehicles include a vast number of components that, depending on their specific function, are subject to different types of stress and wear that can result in faults and malfunctioning. The quality and reliability of vehicles components have a substantial impact on the driver experience. Generally, vehicle owners expect their vehicles to perform reliably for long times despite the high loads the vehicles are exposed to. Vehicle failure is both annoying for the vehicle owner and potentially costly both for the owner and the vehicle manufacturer.

One approach to prevent vehicle component failure is to proactively change components or increase workshop visits. However, although proactively changing components may prevent component failure, it leads to an unnecessary cost for the replacement components, and to additional workshop visits and vehicle downtime when replacing the components. Further, increasing the workshop visits to, instead of replacing, regularly inspect the condition of the components is also time consuming and thus leads to vehicle downtime. For a commercially used vehicle it is especially important to avoid downtime.

Although it is unavoidable that vehicle components wear out, a better approach would be to prevent a fault from occurring in the first place. Thus, it is desirable to prolong the lifetime of vehicle components to at least reduce the number of costly workshop visits and component replacement.

### SUMMARY

An object of the invention is to provide a method and system for prevention of fault events on vehicles that at least partly alleviates the deficiencies with the prior art.

According to a first aspect of the invention, the object is achieved by a method according to claim 1.

According to the first aspect of the invention, there is provided a method for prevention of fault events on vehicles, the method comprises the steps of: acquiring predictive data related to predictive events for a vehicle; processing the predictive data with a vehicle performance model adapted to relate specific predictive events to specific vehicle performance events; and adjusting a control strategy for the vehicle based on an outcome of the processing to at least reduce the risk that a specific vehicle performance event occurs when the vehicle reaches a corresponding specific predictive event.

By the provision of a method which takes advantage of a vehicle performance model that is able to relate specific predictive events to specific vehicle performance events it is possible to adjust the control strategy for the vehicle to reduce the risk that a fault occurs when the vehicle reaches the specific predictive event. Information provided by the predictive data allows for predicting a future event of the vehicle. The vehicle performance model allows for using the predictive data, to predict whether a specific vehicle performance event is likely to occur at the future event of the vehicle, and if so, adjust the control strategy to reduce the risk that the specific vehicle performance event occurs. However, the vehicle is still allowed to reach the specific predictive event, thereby not affecting the driver's intention substantially.

By the provision of the herein proposed method, increased use time for the user of the vehicle is provided by avoiding down-time due to faults.

Further, the herein proposed method may provide for reduced fuel consumption and for improved emission robustness in particular when the method is applied to the aftertreatment system of the vehicle. Emission robustness is the ability to avoid occasions where the emission deviates outside desired limits, i.e. to provide even emission levels within the desired limits over time.

A predictive event is an event that may be considered to be reproduceable, or that follows a certain known pattern, or in some cases are even unavoidable. Based on the predictive data, it is considered likely with high confidence that the predictive event will occur. Example predictive data is related to at least one of geographical data, drive cycle data, and time of day data, day or week data, and/or month of year data. For example, using geographical data as predictive data advantageously provides the possibility to adjust the control strategy before the vehicle reaches an area where a specific vehicle performance event is likely to occur according to the vehicle performance model. Similarly, using for example time of day advantageously allows for adjusting the control strategy before a certain time of the day is reached, which is indicated as a high risk for a specific vehicle performance according to the vehicle performance model. This is similarly advantageously used for other time related predictive events such as day of the week, week of the year, and/or month of the year. Drive cycle data may be related to a known route that is repeated by the vehicle, such as for example the route of a public transportation bus. The outcome of the processing step may thus be that the vehicle will be at a specific predictive event where a specific vehicle performance event is likely to occur according to the vehicle performance model.

The vehicle performance model may be adapted or provided in various forms, with ability to take predictive data as input, and based on the predictive data, provide an output comprising an indication of one of more specific vehicle performance events that may occur at a future predictive event.

Processing the predictive data with a vehicle performance model may include to correlate the predictive data with data of the vehicle performance model to thereby find a future specific vehicle performance event that may occur at a future predictive event.

A control strategy is related to controlling a function of the vehicle or a vehicle subsystem or a vehicle component with the aim to prevent a specific vehicle performance event from occurring.

A specific vehicle performance event may relate to various faults or vehicle performance states or vehicle conditions that are undesirable. Example specific vehicle performance events include vehicle component fault or failure and unexpectedly high fuel or energy consumption.

According to an example embodiment, the method may further comprise acquiring vehicle performance data related to the specific performance events for the vehicle, and including the vehicle performance data in the vehicle performance model. Hereby, the vehicle performance model is advantageously improved with additional vehicle performance data while the vehicle is operative. Further, basing the vehicle performance model for the specific vehicle on vehicle performance data for that specific vehicle advantageously provides for creating a vehicle performance model that is unique for the specific vehicle, thereby providing an accurate vehicle performance model for that specific vehicle.

According to an example embodiment, the vehicle may be a first vehicle, the method may further comprise acquiring vehicle performance data related to the specific performance events for at least one second vehicle, and including the vehicle performance data for the at least one second vehicle in the vehicle performance model. Including larger amounts of vehicle performance data advantageously allows for creating an improved vehicle performance model that is more accurate for a larger number of vehicles operating the method. Accordingly, the vehicle performance model may be improved by including vehicle performance data from vehicles other than the first vehicle in the construction of the vehicle performance model.

According to an example embodiment, adjusting a control strategy may comprise adjusting a control strategy for a component of an exhaust aftertreatment system. Hereby, faults or undesired conditions of components in the exhaust aftertreatment system may advantageously be prevented.

According to an example embodiment, adjusting a control strategy may comprise at least one of proactive regeneration of a urea nozzle, proactive regeneration of a particulate filter, adjusting dosing of urea injection, and adjusting engine torque. Proactive regeneration of the urea nozzle or particulate filter advantageously avoids clogging the urea nozzle or filter. Further, proactive regeneration of a urea nozzle and/or adjusting dosing of urea injection advantageously provides for avoiding urea crystal build-up. Adjusting torque and/or engine speed, e.g. by gear selection, may achieve a more beneficial operating condition (temperature, mass flow, NOx, HC etc.) for the aftertreatment system to thereby reduce emissions.

According to an example embodiment, the method may comprise transmitting the acquired predictive data and/or outcome data indicative of the outcome of the processing step, and/or vehicle performance data to a remote server. Hereby, data may advantageously be collected at a remote server to provide for off-line analysis of vehicle performance and for improving a vehicle performance model further.

According to an example embodiment, the vehicle performance model may be a statistical model, or a machine learning model formed from vehicle performance data from the vehicle or from a plurality of vehicles. Thus, various types of vehicle performance models are conceivable. A simple form of model is a look-up table type model, however, what could be a more preferred and accurate model is based on a machine learning algorithm that can be continuously improved using additional vehicle performance data. The machine learning algorithm may for example be a supervised or unsupervised machine learning algorithm.

Generally, the machine learning algorithm may be selected based on the specific implementation at hand. For example, a simple "is else model" may be used or a more advanced machine learning model may be used such as neural networks, minimum search, gradient decent, linear regression etc.

According to an example embodiment, the vehicle performance model may be based on vehicle performance data related to at least one of diagnostic data, fault event data, fuel economy data and/or emission event data. These example data are readily available in vehicles and provide relevant information for building accurate models.

According to a second aspect of the invention, there is provided a system for prevention of fault events on a vehicle, the system comprises: a data acquisition unit configured to acquire predictive data related to predictive events for the vehicle; and a control unit configured to: acquire a signal indicative of an outcome of a processing step where predictive data is processed with a vehicle performance model adapted to relate specific predictive events to specific vehicle performance events; and to adjust a control strategy for the vehicle based on the outcome of the processing step to at least reduce the risk that a specific vehicle performance event occurs when the vehicle reaches a corresponding specific predictive event.

According to example embodiments, the control unit may be configured to adjust the control strategy for an exhaust gas aftertreatment system of the vehicle.

Effects and features of the second aspect of the invention are largely analogous to those described above in connection with the first aspect.

According to a third aspect of the invention, there is provided a vehicle comprising the system according to the second aspect.

According to a fourth aspect of the invention, there is provided a computer program comprising program code means for performing the steps of the first aspect when the program is run on a computer.

According to a fifth aspect of the invention, there is provided a computer readable medium carrying a computer program comprising program code means for performing the steps of the first aspect when the program product is run on a computer.

According to a sixth aspect of the invention, there is provided a control unit for adjusting a control strategy for prevention of fault events on a vehicle, the control unit being configured to perform the steps of the first aspect.

Effects and features of the third, fourth, fifth, and sixth aspects are largely analogous to those described above in relation to the first aspect.

Further features of, and advantages will become apparent when studying the appended claims and the following description. The skilled person will realize that different features may be combined to create embodiments other than those described in the following, without departing from the scope of the present disclosure.

### BRIEF DESCRIPTION OF THE DRAWINGS

With reference to the appended drawings, below follows a more detailed description of embodiments of the invention cited as examples.

In the drawings:
Fig. 1 is a vehicle in the form a truck according to example embodiments of the invention;
Fig. 2 is a flow-chart of method steps according to example embodiments of the invention;
Fig. 3 is a flow-chart of method steps according to example embodiments of the invention;
Fig. 4 conceptually illustrates example embodiments of the invention;
Fig. 5 conceptually illustrates example embodiments of the invention; and
Fig. 6 is a schematic illustration of a system according to example embodiments of the invention.

### DETAILED DESCRIPTION OF EXAMPLE EMBODIMENTS OF THE INVENTION

The present invention will now be described more fully hereinafter with reference to the accompanying drawings, in which exemplary embodiments of the invention are shown. The invention may, however, be embodied in many different forms and should not be construed as limited to the embodiments set forth herein; rather, these embodiments are provided for thoroughness and completeness. The skilled person will recognize that many changes and modifications may be made within the scope of the appended claims.

Like reference character refer to like elements throughout the description.

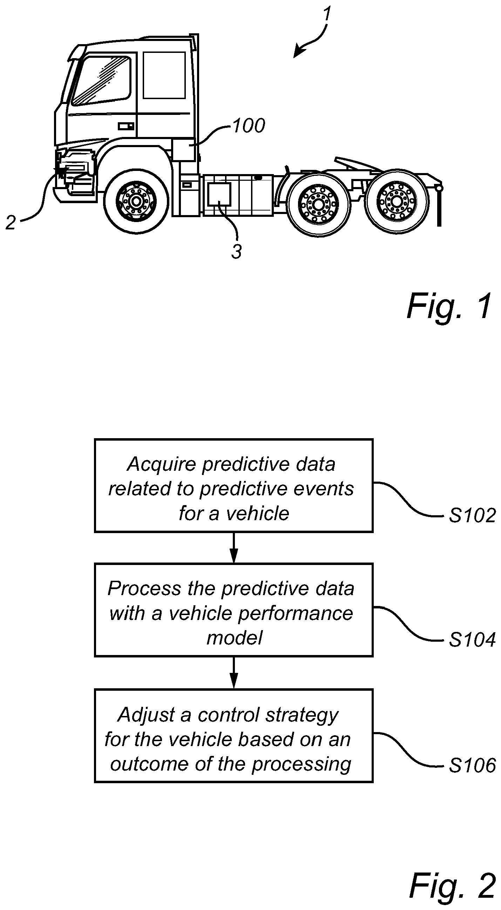

Fig. 1 illustrates a vehicle in the form of a truck 1 comprising an engine 2 such as for example an internal combustion engine, a hydrogen engine e.g. a fuel cell-based engine, although, the invention is also applicable to fully electric vehicles and to hybrid electric vehicles. The truck 1 further comprises a system 100 for prevention of fault events on the truck 1. Depending on the type of engine in the truck, the truck may further comprise an exhaust gas aftertreatment system 3 typically including catalytic devices such as selective catalytic reduction units. Further, exhaust gas aftertreatment system 3 typically includes e.g. urea injectors, particulate filters, nitride oxide sensors, in case of the vehicle comprising an internal combustion engine.

Fig. 2 is a flow-chart of method steps according to embodiments of the invention. In step S102, acquiring predictive data related to predictive events for a vehicle. The predictive data is such that it can be predicted that the predictive event will occur, where the predictive event may be a geographical area or location that the vehicle will most likely reach. Other possible predictive events are time related, such as a specific time of the day or day of the week, although other time related predictive events are also conceivable.

The predictive data is processed in step S104, with a vehicle performance model adapted to relate specific predictive events to specific vehicle performance events. Processing the predictive data with the vehicle performance model allows for making conclusions regarding whether the vehicle will reach a specific vehicle performance event at an upcoming location or at a near-future time instant.

In step S106, a control strategy for the vehicle based on an outcome of the processing is adjusted to at least reduce the risk that a specific vehicle performance event occurs when the vehicle reaches a corresponding specific predictive event. Thus, if the outcome of the processing using the vehicle performance model indicates that a specific vehicle performance event may occur or is even imminent if no action is taken, a control strategy may be adjusted to reduce the risk that that specific vehicle performance event occurs.

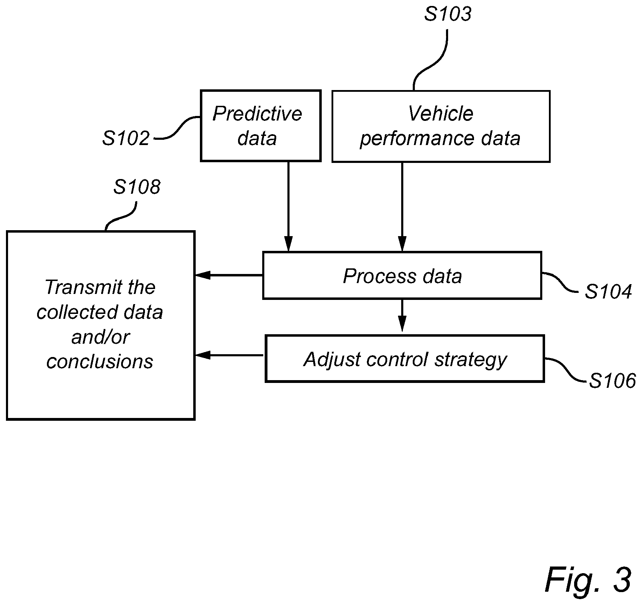

Fig. 3 is a flow-chart of method steps according to further embodiments of the invention. In fig. 3, it is further illustrated that in addition to acquiring the predictive data in step S102 as discussed in relation to fig. 2, it is also included a step S103 of acquiring vehicle performance data related to the specific performance events for the vehicle 1 generally related to fault events or emission data. More specifically, the vehicle performance data may relate to diagnostic data, fault event data, fuel economy data and/or emission event data.

The predictive data and the vehicle performance data is processed in step S104 to make conclusions from the acquired data, such as whether a specific vehicle performance event is likely to occur ahead, or within a specified time duration. Further, the acquired vehicle performance data in step S103 may be used for building or updating or improving the vehicle performance model.

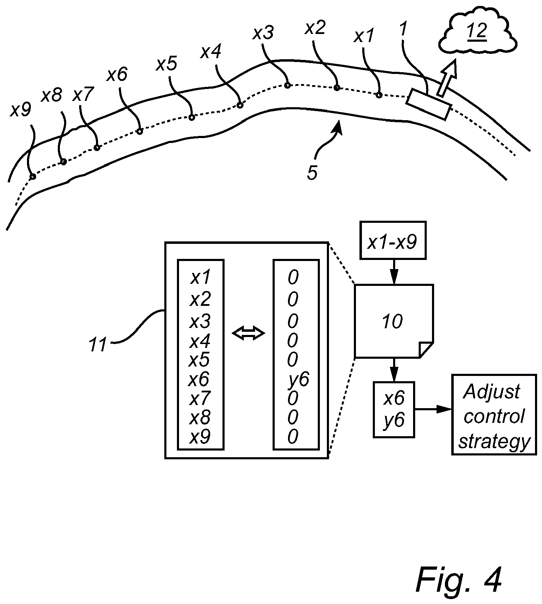

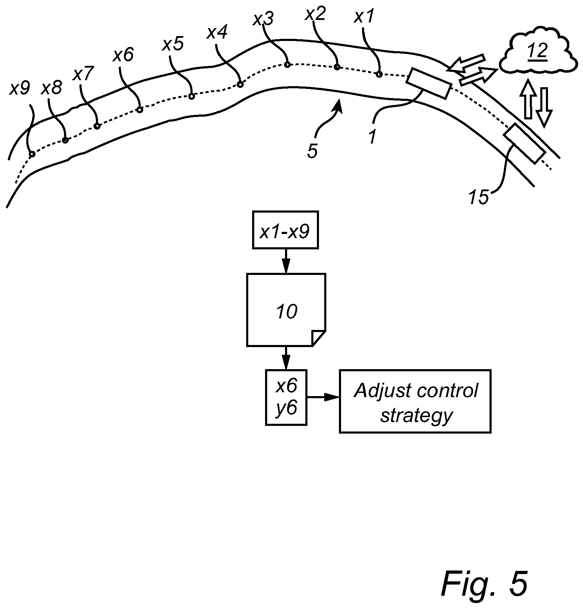

The processed data, i.e. the predictive data and the vehicle performance data may be transmitted, in step S108 to a remote server 12, see figs. 4 and 5, where it can be processed for making additional analysis of the vehicle performance. This can advantageously be used for improving the understanding of the vehicle's performance. For example, unexpectedly high fuel or energy consumption, could be interesting for a vehicle manufacturer to analyse further. As a further example, relating specific vehicle fault events to predictive data may create valuable knowledge about where or when specific types of fault events are most likely to occur. In addition, the outcome of the processing, for example the vehicle performance model or the conclusion related to whether a risk of a coming specific vehicle performance event is present may be transmitted, in step S108, to the remote server 12. Transmission to the server may be performed using known telematics.

Further, as discussed above, in step S106, a control strategy for the vehicle is adjusted based on an outcome of the processing to at least reduce the risk that a specific vehicle performance event occurs when the vehicle reaches a corresponding specific predictive event. Information related to what control strategy was adjusted or how it was adjusted, may be transmitted, in step S108, to the remote server 12.

In preferred embodiments, adjusting a control strategy comprises adjusting a control strategy for a component of an exhaust aftertreatment system 2. For example, adjusting a control strategy may comprise at least one of proactive regeneration of a urea nozzle, proactive regeneration of a particulate filter, adjusting dosing of urea injection, and adjusting engine torque. This will be discussed in more detail with reference to subsequent drawings.

Fig. 4 conceptually illustrates a vehicle 1 according to embodiments of the present invention. The vehicle 1 is travelling on the road 5 and acquires predictive data. The predictive data is such that future events, x1-x9 are predictable. The predictive events x1-x9 lie ahead of the vehicle 1 and has not yet occurred. The predictive data may be related to at least one of geographical data, drive cycle data, and time of day data, day or week data, and/or month of year data. For example, the predictive events x1-x9 may be geographical locations predictable from predictive data acquired by a GPS of the vehicle 1. Thus, since the vehicle is travelling on the specific road 5 and the present location of the vehicle 1 may be determined by the GPS, the future locations x1-x9 are predictable. Similarly, if the predictive data are related to time stamps, the future time stamps x1-x9 are predictable.

The acquired predictive events, e.g. geographical locations x1-x9 are processed with a vehicle performance model 10. Generally, the vehicle performance model 10 is able to relate specific predictive events to specific vehicle performance events. For example, given a set of predictive events x1-x9, the vehicle performance model 10 can determine whether one or more of the predictive events x1-x9 is related to a specific vehicle performance event, such as a fault of a vehicle component. The vehicle performance model 10 is here represented by a look-up table representation 11 having a corresponding specific vehicle performance event slot for each predictive event x1-x9. At the predictive event x6 is a specific vehicle performance event y6 indicated. For example, it may be known from the model 10 that is based on prior data from the same vehicle and/or from other vehicles, that there is a relatively high risk for a fault, or other type of a specific vehicle performance event such as increased emission, at the predictive event x6. The vehicle 1 is approaching the predictive event x6, and in order to reduce the risk that a specific vehicle performance event y6 occurs when the vehicle reaches a corresponding specific predictive event x6, a control strategy for the vehicle may be adjusted.

As an example, it may be known from prior collected vehicle performance data, that a urea dosing nozzle of an aftertreatment system of the vehicle 1 often clog at the geographical location related to the predictive event x6. Thus, the vehicle performance model 10 can relate the predictive event x6 to the clogging of the urea nozzle. To prevent the urea nozzle from clogging, a control strategy may be to either add extra heating to the system when approaching the predictive event x6, or to adjust the urea dosing strategies in order to minimize the risk of clogging.

Another example could be that a diesel particulate filter could be filled with soot during certain conditions related to geographic locations and maybe also related to specific times of the day. In order to reduce the risk of clogging the filter, a control strategy may be to add extra heating and/or reduce the amount of soot from the engine to trigger a regeneration of the filter to avoid that the diesel particulate filter is overfilled. In addition, that the vehicle is about to leave the predictive event x6, and enter predictive event x7, may trigger another control strategy to avoid triggering a regeneration, since in x7 the vehicle may experience high load conditions again, where the increased temperatures will quickly decrease the soot levels in the diesel particulate filter again.

A further example is that the specific vehicle performance event is a risk for building urea crystals in a urea dosing mixbox in the aftertreatment system of the vehicle 1. With this knowledge in the vehicle performance model, the adjustment of a control strategy may advantageously be to proactively trigger a urea crystal regeneration, or adjust the dosing strategies to mitigate the buildup rate, or possibly to not take action if it is known that the vehicle will soon experience high load conditions again at near future predictive event. A further possible control strategy adjustment may be to reduce engine torque/power.

The vehicle 1 may be commutatively connected with a remote server 12 via a wireless communication link. Using the communication link, the vehicle may transmit the acquired predictive data x1-x9 and/or outcome data indicative of the outcome of the processing step, and/or vehicle performance data to the remote server 12. For example, by transmitting the acquired predictive data and the vehicle performance data to a remote server 12, a vehicle performance model may be trained off-line with further data to improve the model accuracy. The improved model may be installed in the vehicle 1 at a later time.

The vehicle performance model 10 may be constructed in various ways, such as in a simple look-up table, or in other embodiments such as a statistical model, or a machine learning model formed from vehicle performance data from the single vehicle 1 to thereby construct a model specific to that vehicle 1. For example, as the vehicle 1 travels, more data is collected, to train a machine learning model, or add additional data to a statistical model. A model tailored to the specific vehicle 1 provides for a model accurate for that specific vehicle which may have its own performance characteristics, such as emission performance. However, the amount of data for constructing the model is limited to the data collected by that one vehicle.

Fig. 5 conceptually illustrates the situation described with reference to fig. 4, but with a second vehicle 15 in addition to the first vehicle 1. The second vehicle may acquire vehicle performance data related to the specific performance events for the second vehicle 15. The second vehicle may transmit the vehicle performance data and the corresponding predictive data to the remote server 12. A control unit on the remote server 12 may build the vehicle performance model 10 based on vehicle performance data and predictive data from both of the first vehicle 1 and the second vehicle 15. Thus, the vehicle performance data for the at least one second vehicle 15 is included in the vehicle performance model 10 for the first vehicle. Further, through the remote server 12, the vehicle performance model is accessible to both the first vehicle 1 and the second vehicle 15.

As discussed in relation to fig. 4, the vehicle performance model may be constructed in various ways. In addition to the discussion relating to forming the model based on data from a single vehicle, in other possible embodiments, the vehicle performance model 10 may be formed from vehicle performance data from a plurality of vehicles. Thus, to increase the amount of data used for constructing the vehicle performance model, data from a plurality of vehicles, e.g. vehicles 1 and 15 may be used. Then, the remote server 12 may collect vehicle performance data and predictive data from the plurality of vehicles, and train a machine learning algorithm or build a statistical model, based on a larger amount of data, but then constructing a more general model compared to using data from a single vehicle. Thus, topography may be used to identify predictive events where typical faults have a high risk of occurring for a complete vehicle fleet.

As discussed in relation to fig. 4, the predictive data x1-x9 is related to at least one of geographical data, drive cycle data, and time of day data, day or week data, and/or month of year data.

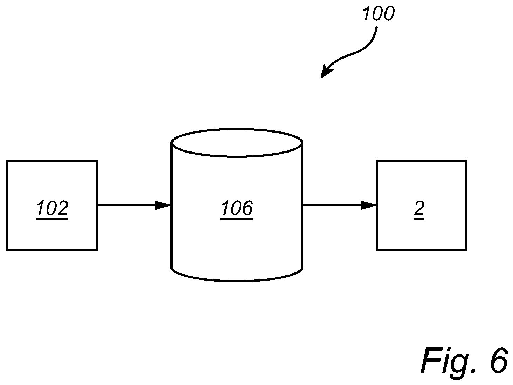

Fig. 6 is a schematic illustration of a system 100 for prevention of fault events on a vehicle according to example embodiments.

The system comprises a data acquisition unit 102 configured to acquire predictive data x1-x9 related to predictive events for the vehicle 1. The data acquisition unit may include e.g. a global positioning system device for collecting geographical data or a clock unit for collecting time data or a unit for providing drive cycle statistics related to both time instants and geographical points along a drive cycle.

The system 100 further comprises a control unit 106 configured to acquire a signal indicative of an outcome of a processing step where predictive data is processed with a vehicle performance model adapted to relate specific predictive events to specific vehicle performance events. Further, the control unit 106 is configured to adjust a control strategy for the vehicle based on the outcome of the processing step to at least reduce the risk that a specific vehicle performance event occurs when the vehicle reaches a corresponding specific predictive event.

In preferred embodiments, the control unit 106 is configured to adjust the control strategy for an exhaust gas aftertreatment system 2 of the vehicle.

A control unit may include a microprocessor, microcontroller, programmable digital signal processor or another programmable device. Thus, the control unit comprises electronic circuits and connections (not shown) as well as processing circuitry (not shown) such that the control unit can communicate with different parts of the truck such as the brakes, suspension, driveline, in particular an electrical engine, an electric machine, a clutch, and a gearbox in order to at least partly operate the truck. The control unit may comprise modules in either hardware or software, or partially in hardware or software and communicate using known transmission buses such as CAN-bus and/or wireless communication capabilities. The processing circuitry may be a general purpose processor or a specific processor. The control unit comprises a non-transitory memory for storing computer program code and data upon. Thus, the skilled addressee realizes that the control unit may be embodied by many different constructions.

The control functionality of the present disclosure may be implemented using existing computer processors, or by a special purpose computer processor for an appropriate system, incorporated for this or another purpose, or by a hardwire system. Embodiments within the scope of the present disclosure include program products comprising machine-readable medium for carrying or having machine-executable instructions or data structures stored thereon. Such machine-readable media can be any available media that can be accessed by a general purpose or special purpose computer or other machine with a processor. By way of example, such machine-readable media can comprise RAM, ROM, EPROM, EEPROM, CD-ROM or other optical disk storage, magnetic disk storage or other magnetic storage devices, or any other medium which can be used to carry or store desired program code in the form of machine-executable instructions or data structures and which can be accessed by a general purpose or special purpose computer or other machine with a processor. When information is transferred or provided over a network or another communications connection (either hardwired, wireless, or a combination of hardwired or wireless) to a machine, the machine properly views the connection as a machine-readable medium. Thus, any such connection is properly termed a machine-readable medium. Combinations of the above are also included within the scope of machine-readable media. Machine-executable instructions include, for example, instructions and data which cause a general-purpose computer, special purpose computer, or special purpose processing machines to perform a certain function or group of functions.

Although the figures may show a sequence the order of the steps may differ from what is depicted. Also, two or more steps may be performed concurrently or with partial concurrence. Such variation will depend on the software and hardware systems chosen and on designer choice. All such variations are within the scope of the disclosure. Likewise, software implementations could be accomplished with standard programming techniques with rule-based logic and other logic to accomplish the various connection steps, processing steps, comparison steps and decision steps. Additionally, even though the invention has been described with reference to specific exemplifying embodiments thereof, many different alterations, modifications and the like will become apparent for those skilled in the art.

It is to be understood that the present invention is not limited to the embodiments described above and illustrated in the drawings; rather, the skilled person will recognize that many changes and modifications may be made within the scope of the appended claims.

## Claims

1. A method for prevention of fault events on vehicles **characterized by** the steps of:
acquiring (S102) predictive data related to predictive events (x1-x7) for a vehicle (1);
processing (S104) the predictive data (x1-x7) with a vehicle performance model (10) adapted to relate specific predictive events to specific vehicle performance events; and
adjusting (S106) a control strategy for the vehicle based on an outcome of the processing to at least reduce the risk that a specific vehicle performance event (y6) occurs when the vehicle reaches a corresponding specific predictive event (x6).

2. The method according to claim 1, further comprising acquiring (S103) vehicle performance data related to the specific performance events for the vehicle (1) and including the vehicle performance data in the vehicle performance model (10).

3. The method according to any one of claims 1 and 2, the vehicle being a first vehicle (1), the method further comprising acquiring vehicle performance data related to the specific performance events for at least one second vehicle (15), and including the vehicle performance data for the at least one second vehicle (15) in the vehicle performance model (10).

4. The method according to any one of the preceding claims, wherein adjusting a control strategy comprises adjusting a control strategy for a component of an exhaust aftertreatment system (2).

5. The method according to any one of the preceding claims, wherein adjusting a control strategy comprises at least one of proactive regeneration of a urea nozzle, proactive regeneration of a particulate filter, adjusting dosing of urea injection, and adjusting engine torque.

6. The method according to any one of the preceding claims, comprising transmitting (S108) the acquired predictive data (x1-x7) and/or outcome data indicative of the outcome of the processing step, and/or vehicle performance data to a remote server (12).

7. The method according to any one of the preceding claims, wherein the vehicle performance model (10) is a statistical model, or a machine learning model formed from vehicle performance data from the vehicle or from a plurality of vehicles.

8. The method according to any one of the preceding claims, wherein predictive data (x1-x7) is related to at least one of geographical data, drive cycle data, time of day data, day or week data, and/or month of year data.

9. The method according to any one of the preceding claims, wherein the vehicle performance model is based on vehicle performance data related to at least one of diagnostic data, fault event data, fuel economy data and/or emission event data.

10. A system (100) for prevention of fault events on a vehicle **characterized by**:
a data acquisition unit (102) configured to acquire predictive data (x1-x7) related to predictive events for the vehicle (1); and
a control unit (106) configured to:
acquire a signal indicative of an outcome of a processing step where predictive data is processed with a vehicle performance model adapted to relate specific predictive events to specific vehicle performance events; and to
adjust a control strategy for the vehicle based on the outcome of the processing step to at least reduce the risk that a specific vehicle performance event occurs when the vehicle reaches a corresponding specific predictive event.

11. The system according to claim 10, wherein the control unit is configured to adjust the control strategy for an exhaust gas aftertreatment system (2) of the vehicle.

12. A vehicle (1) comprising a system (100) according to any one of claims 10 and 11.

13. A computer program comprising program code means for performing the steps of any of claims 1-9 when said program is run on a computer.

14. A computer readable medium carrying a computer program comprising program code means for performing the steps of any of claims 1-9 when said program product is run on a computer.

15. A control unit for adjusting a control strategy for prevention of fault events on a vehicle, the control unit being configured to perform the steps of the method according to any of claims 1-9.
